# EUROPÄISCHE PATENTSCHRIFT

(11) **EP 4 043 251 B1**
(45) Veröffentlichungstag und Bekanntmachung des Hinweises auf die Patenterteilung: **22.11.2023**
(21) Anmeldenummer: 22152253.5
(22) Anmeldetag: 19.01.2022
(51) Int. Cl.: B60H 1/00

(54) **VERFAHREN ZUM EINLEITEN EINES ABTAUPROZESSES EINES WÄRMEÜBERTRAGERS EINER WÄRMEPUMPE EINES KRAFTFAHRZEUGES**
METHOD FOR INITIATING A DEFROSTING PROCESS OF A HEAT EXCHANGER OF A HEAT PUMP OF A MOTOR VEHICLE
PROCÉDÉ DE DÉMARRAGE D'UN PROCESSUS DE DÉGIVRAGE D'UN ÉCHANGEUR DE CHALEUR D'UNE POMPE À CHALEUR D'UN VÉHICULE AUTOMOBILE

(30) Priorität: 15.02.2021 DE 102021201377
(43) Veröffentlichungstag der Anmeldung: 17.08.2022
(73) Patentinhaber: VOLKSWAGEN AG, 38440 Wolfsburg (DE)
(72) Erfinder: Westhäuser, Jochen, 38102 Braunschweig (DE); Twenhövel, Sven, 38524 Sassenburg (DE); Albrecht, Jan-Christoph, 38442 Wolfsburg (DE)

(56) Entgegenhaltungen:
- EP-A1- 2 666 652
- CN-A- 109 109 613
- DE-A1-102011 051 285

## Beschreibung

Die vorliegende Erfindung betrifft ein Verfahren zum Einleiten eines Abtauprozesses eines Wärmeübertragers einer Wärmepumpe eines Kraftfahrzeuges, insbesondere eines Elektrofahrzeuges oder eines batterieelektrischen Fahrzeuges oder eines Hybridelektrokraftfahrzeuges, wobei dem Wärmeübertrager ein Ventilator zugeordnet ist, wobei eine Leistungsaufnahme und/oder eine Drehzahl des Ventilators überwacht wird, wobei ein Abtauprozess eingeleitet wird, wenn die Leistungsaufnahme und/oder die Drehzahl einen Schwellwert überschreitet und/oder unterschreitet.

Ferner betrifft die vorliegende Erfindung ein Kraftfahrzeug mit einer Vorrichtung zum Abtauen eines Wärmeübertragers einer Wärmepumpe des Kraftfahrzeuges, wobei die Vorrichtung eine Recheneinheit aufweist.

Wärmepumpen werden in der Elektromobilität zum Beheizen des Fahrzeuginnenraumes eingesetzt. Die zum Heizen benötigte Wärme wird aus der Außenluft entnommen. Hierzu muss ein Umgebungswärmeübertrager der Wärmepumpe unter die Umgebungstemperatur gekühlt werden. Unterschreitet die Außenluft dabei ihren Taupunkt, bildet sich Reif auf der Oberfläche des Umgebungswärmeübertragers, wodurch die Luft am Durchströmen des Wärmeübertragers gehindert wird. Ein effizienter Betrieb der Wärmepumpe ist dann nicht mehr gesichert. Um wieder eine Durchströmung des Wärmeübertragers mit Außenluft zu ermöglichen, sind Abtauzyklen notwendig, bei denen der Wärmeübertrager aufgeheizt wird. Während des Abtauzyklus schmilzt das Eis und eine Durchströmung des Wärmeübertragers kann wieder erfolgen.

Zum Einleiten des Abtauprozesses sind im Stand der Technik Verfahren bekannt, bei denen eine Abnahme des Saugdruckes der Wärmepumpe überwacht wird.

Ferner sind Verfahren bekannt, bei denen eine zusätzliche Sensorik verwendet wird, mit denen die Schichtdicke des auf dem Wärmeübertrager gebildeten Eises oder Reifs gemessen wird.

Aus der DE 10 2009 052 409 B4 ist eine Luft/Wasserwärmepumpe mit einem Verdampfer bekannt, wobei dem Verdampfer ein Lüfter und eine Lüftersteuereinheit zugeordnet ist. Die Lüftersteuereinheit erfasst einen Strom und/oder eine Drehzahl des Lüfters und ermittelt einen Arbeitspunkt des Lüfters basierend auf dem erfassten Strom und/oder der Drehzahl. Die Lüftersteuereinheit ist dazu ausgestaltet, den Arbeitspunkt des Lüfters zu überwachen und bei Unter- beziehungsweise Überschreiten eines Schwellwertes ein Abtaueinleitungssignal an einen Regler weiterzuleiten.

Die EP 0 563 724 B1 offenbart ein Verfahren zur Feststellung der Eisbildung auf einem Verdampfer eines Kühlgerätes, wobei das Kühlgerät einen von einem elektrischen Motor angetriebenen Ventilator zum Durchströmen von Luft durch den Verdampfer aufweist. Bei dem Verfahren wird die Änderung eines Betriebsparameters des den Ventilator betreibenden Motors gemessen.

Aus der EP 2 666 652 A1 ist eine Klimaanlage für ein Fahrzeug bekannt, welche eingerichtet ist, einen Abtauvorgang für einen externen Wärmetauscher durchzuführen. In Abhängigkeit einer von einem Ventilator aufgrund einer Durchströmung mit Luft erzeugten elektromotorischen Kraft wird der Abtauvorgang eingeleitet.

Die CN 109109613 A offenbart ein Verfahren zum Einleiten eines Abtauprozesses eines Wärmeübertragers einer Wärmepumpe eines Kraftfahrzeugs.

Die DE 10 2011 051 285 A1 offenbart ein Verfahren zur Vereisungsvermeidungsregelung für Verdampfer von Wärmepumpen von Klimaanlagen in Fahrzeugen, wobei eine Regelung des Oberflächentemperaturniveaus des Verdampfers und der Strömungsgeschwindigkeit der Umgebungsluft in Abhängigkeit von der Umgebungslufttemperatur vor dem Verdampfer erfolgt.

Nachteilig an den bekannten Verfahren, bei denen der Saugdruck der Wärmepumpe des Kraftfahrzeugs überwacht wird, ist, dass der Saugdruck auch temporär im Anfahrprozess des Kraftfahrzeugs unterschritten werden kann, sodass gegebenenfalls unnötige Abtauprozesse eingeleitet werden.

Darüber hinaus berücksichtigen bekannte Verfahren nicht, dass die Stromaufnahme oder Drehzahl eines einem Wärmeübertrager zugeordneten Ventilators in einem Kraftfahrzeug neben der Dicke der Eisschicht auf dem Verdampfer zusätzlich auch von weiteren Parametern abhängen kann.

Der vorliegenden Erfindung liegt die Aufgabe zugrunde, ein Verfahren zum Einleiten eines Abtauprozesses eines Wärmeübertragers einer Wärmepumpe eines Kraftfahrzeuges bereitzustellen, welches unempfindlich gegenüber externen, die Luftströmung durch den Verdampfer beeinflussenden Parametern ist, und mit welchem unnötige Abtauprozesse vermieden werden können.

Zur Lösung der der Erfindung zugrundeliegenden Aufgabe wird ein Verfahren zum Einleiten eines Abtauprozesses eines Wärmeübertragers einer Wärmepumpe eines Kraftfahrzeuges, insbesondere eines Elektrofahrzeuges oder eines batterieelektrischen Fahrzeuges oder eines Hybridelektrokraftfahrzeuges, vorgeschlagen, wobei dem Wärmeübertrager ein Ventilator zugeordnet ist, wobei eine Leistungsaufnahme und/oder eine Drehzahl des Ventilators überwacht wird, wobei ein Abtauprozess eingeleitet wird, wenn die Leistungsaufnahme und/oder die Drehzahl einen Schwellwert überschreitet und/oder unterschreitet, wobei der Schwellwert in Abhängigkeit eines Parameters ermittelt wird, wobei der Parameter ein Indikator für eine aktuelle relative Luftgeschwindigkeit der Umgebungsluft zum Kraftfahrzeug ist, wobei ferner vorgesehen ist, dass der Parameter ein Abstandssignal des Kraftfahrzeugs zu einem vorausfahrenden Fahrzeug ist und/oder dass der Parameter eine mittels eines Navigationssystems des Kraftfahrzeugs bestimmte Fahrzeugposition ist.

Der Ventilator ist dem Wärmeübertrager zugeordnet, dies bedeutet, dass der Ventilator in Strömungsrichtung entweder vor oder hinter dem Wärmeübertrager angeordnet und dazu ausgebildet ist, Umgebungsluft durch den Wärmeübertrager zu fördern.

Der Wärmeübertrager ist insbesondere ein Umgebungswärmeübertrager.

Bildet sich eine Eisschicht auf dem Wärmeübertrager, so nimmt der luftseitige Druckverlust am Wärmeübertrager zu. Bei steigenden Druckverlusten nimmt die geförderte Luftmenge ab. Bei konstant gehaltener Drehzahl des Ventilators nimmt bei signifikant erhöhtem Druckverlust der elektrische Energiebedarf und damit die Leistungsaufnahme des Ventilators ab. Die elektrische Leistungsaufnahme des Ventilators lässt auf die geförderte Luftmenge und damit auf die Effizienz der Wärmepumpe schließen. Bei zu geringen Luftmassenströmen kann die Wärmepumpe nicht mehr effizient betrieben werden und ein Abtauprozess muss eingeleitet werden.

Es kann daher durch die Überwachung der Leistungsaufnahme des Ventilators und Vergleich mit einem Schwellwert, insbesondere einem Leistungsaufnahmeschwellwert, vorteilhaft bestimmt werden, ob und wann ein Abtauprozess für den Wärmeübertrager eingeleitet werden soll.

Wird der Ventilator mit einer konstanten Leistungsaufnahme betrieben, so nimmt die Drehzahl bei steigenden Druckverlusten zu. Entsprechend kann durch die Überwachung der Drehzahl des Ventilators und Vergleich mit einem Schwellwert, insbesondere einem Drehzahlschwellwert, vorteilhaft bestimmt werden, ob und wann ein Abtauprozess für den Wärmeübertrager eingeleitet werden soll.

Erfindungsgemäß ist nun vorgesehen, dass der Schwellwert, insbesondere der Leistungsaufnahmeschwellwert oder der Drehzahlschwellwert, in Abhängigkeit eines Parameters ermittelt wird, wobei der Parameter ein Indikator für eine aktuelle relative Luftgeschwindigkeit der Umgebungsluft zum Kraftfahrzeug ist.

Externe Umstände, welche die aktuelle relative Luftgeschwindigkeit der Umgebungsluft zum Kraftfahrzeug beeinflussen, beeinflussen ebenfalls den Luftmassenstrom durch den Wärmeübertrager und damit die sogenannte Anlagenkennlinie der Wärmepumpe. Dies bedeutet, dass die Leistungsaufnahme und/oder die Drehzahl des Ventilators ebenfalls von den externen Umständen abhängen und somit keine ausreichenden Parameter für die Beurteilung, ob ein Abtauprozess eingeleitet werden soll, sind.

Daher wird erfindungsgemäß die Einleitung eines Abtauprozesses zusätzlich von dem Überschreiten oder Unterschreiten eines Schwellwertes, insbesondere eines Leistungsaufnahmeschwellwertes oder eines Drehzahlschwellwertes, von einem weiteren Parameter abhängig gemacht, welcher ein Indikator für eine aktuelle relative Luftgeschwindigkeit der Umgebungsluft zum Kraftfahrzeug ist.

Die Abhängigkeit des Schwellwertes von dem Parameter kann mit einem Berechnungsmodell oder Simulationen bestimmt werden. Darüber hinaus ist es möglich, für übliche Fahrsituationen und externe Umstände, welche die aktuelle relative Luftgeschwindigkeit der Umgebungsluft zum Kraftfahrzeug beeinflussen, eine Tabelle oder ein Kennfeld vorzusehen, aus welcher der jeweils geeignete Schwellwert entnommen werden kann.

Bevorzugt wird ein Abtauprozess eingeleitet, wenn die Leistungsaufnahme den Schwellwert, insbesondere den Leistungsaufnahmeschwellwert unterschreitet, und/oder wenn die Drehzahl den Schwellwert, insbesondere den Drehzahlschwellwert, überschreitet. Es kann aber auch vorgesehen sein, dass ein Abtauprozess eingeleitet wird, wenn die Leistungsaufnahme den Schwellwert, insbesondere den Leistungsaufnahmeschwellwert, überschreitet, und/oder wenn die Drehzahl den Schwellwert, insbesondere den Drehzahlschwellwert, unterschreitet.

Bevorzugt ist vorgesehen, dass der Parameter die aktuelle Fahrgeschwindigkeit des Kraftfahrzeuges ist.

Wird das Kraftfahrzeug mit einer hohen Fahrgeschwindigkeit bewegt, so erhöht sich die relative Luftgeschwindigkeit der Umgebungsluft zum Kraftfahrzeug. Dadurch kann die Leistungsaufnahme des Ventilators bei konstant gehaltener Drehzahl abnehmen, ohne dass für die Abnahme der Leistungsaufnahme eine Vereisung des Wärmeübertragers ursächlich ist.

Um einen unnötigen Abtauprozess zu vermeiden, kann daher der Schwellwert, insbesondere der Leistungsaufnahmeschwellwert und/oder der Drehzahlschwellwert, in Abhängigkeit der aktuellen Fahrgeschwindigkeit des Kraftfahrzeuges angepasst werden.

Mit weiterem Vorteil kann vorgesehen sein, dass der Parameter die Windgeschwindigkeit und/oder die Windrichtung ist.

Mit anderen Worten wird in diesem Fall die absolute Windgeschwindigkeit und/oder Windrichtung über dem Erdboden berücksichtigt. Durch Einbeziehen der Windrichtung kann zudem berücksichtigt werden, ob das Kraftfahrzeug gegen den Wind oder mit dem Wind fährt.

Erfindungsgemäß ist vorgesehen, dass der Parameter ein Abstandssignal des Kraftfahrzeuges zu einem vorausfahrenden Kraftfahrzeug ist.

Bevorzugt kann vorgesehen sein, dass das Abstandssignal ein Abstandswert des Kraftfahrzeuges zu einem vorausfahrenden Kraftfahrzeug ist.

Moderne Fahrzeuge weisen oft eine sogenannte Abstandssensorik auf, mit welcher festgestellt werden kann, ob sich das Kraftfahrzeug hinter einem vorausfahrenden Fahrzeug befindet. Manche dieser Systeme ermitteln zusätzlich noch den Abstandswert, beispielsweise in der Einheit Meter. Durch die von einem vorausfahrenden Fahrzeug bewirkte Abschirmung kann die Leistungsaufnahme des Ventilators bei konstant gehaltener Drehzahl zunehmen. Diese Zunahme kann dazu führen, dass eine Vereisung nicht rechtzeitig erkannt wird. Es ist daher vorteilhaft, wenn für die Bestimmung des Schwellwertes ein Abstandssignal und bevorzugt der Abstandswert des Kraftfahrzeuges zu einem vorausfahrenden Fahrzeug berücksichtigt wird.

Erfindungsgemäß ist vorgesehen, dass der Parameter eine Fahrzeugposition ist. Die Fahrzeugposition wird mittels eines Navigationssystems des Kraftfahrzeugs bestimmt.

Bevorzugt ist die Fahrzeugposition eine Position des Kraftfahrzeuges in einem Straßentunnel, in einem Tal oder in einer Straßenschlucht.

Fährt das Kraftfahrzeug durch einen Straßentunnel, durch ein Tal oder durch eine Straßenschlucht, so kann dies zu einem Abfall des statischen Umgebungsluftdruckes und zu einer Erhöhung der relativen Luftgeschwindigkeit der Umgebungsluft zum Kraftfahrzeug führen. Auch diese Veränderung der Luftgeschwindigkeit kann zu einer Veränderung der Leistungsaufnahme oder der Drehzahl des Ventilators führen. Es ist daher von Vorteil, wenn die Position des Fahrzeuges für die Festlegung des Schwellwertes berücksichtigt wird.

Bevorzugt kann vorgesehen sein, dass der Schwellwert in Abhängigkeit einer Taupunkttemperatur der Luft am Wärmeübertrager ermittelt wird, und/oder dass der Abtauprozess nur eingeleitet wird, wenn die Temperatur der Luft an dem Wärmeübertrager die Taupunkttemperatur unterschreitet.

Durch die Berücksichtigung der Taupunkttemperatur und/oder der Temperatur kann vermieden werden, dass ein Abtauprozess eingeleitet wird, auch wenn sich kein Eis auf dem Wärmeübertrager gebildet hat.

Mit weiterem Vorteil kann vorgesehen sein, dass der Schwellwert in Abhängigkeit der Luftdichte und/oder der Außenlufttemperatur und/oder der Außenluftfeuchtigkeit ermittelt wird.

Ferner kann bevorzugt vorgesehen sein, dass der Parameter ein Öffnungsgrad einer Kühlerjalousie ist.

Die im Kraftfahrzeug in Strömungsrichtung bevorzugt vor dem Wärmeübertrager angeordnete Kühlerjalousie beeinflusst je nach Öffnungsgrad den Luftmassenstrom durch den Wärmeübertrager. Es ist daher vorteilhaft, wenn der Öffnungsgrad der Kühlerjalousie für die Bestimmung der Einleitung des Abtauprozesses berücksichtigt wird.

Mit weiterem Vorteil kann vorgesehen sein, dass der Ventilator zur Bestimmung, ob ein Abtauprozess eingeleitet werden soll, für einen kurzen Zeitraum mit einer erhöhten oder einer erniedrigten Drehzahl betrieben wird.

Bevorzugt wird der Ventilator für den kurzen Zeitraum mit Drehzahlen von weniger als 50 %, weiter bevorzugt von weniger als 30 %, insbesondere bevorzugt von weniger als 20 % einer Solldrehzahl betrieben. Beispielsweise ist es vorteilhaft, selbst bei ausreichendem Luftmassenstrom den Ventilator bei Drehzahlen im Bereich von 10 bis 25 % der Solldrehzahl zu betreiben, um daraus den Abtauvorgang abzuleiten.

Der kurze Zeitraum kann weniger als eine Minute, bevorzugt weniger als 30 Sekunden, insbesondere bevorzugt weniger als 20 Sekunden betragen.

Grundsätzlich ist es auch möglich, den Ventilator für den kurzen Zeitraum mit einer höheren Drehzahl, beispielsweise mit einer um 20 %, bevorzugt um 30 %, besonders bevorzugt um 50 %, gegenüber der Solldrehzahl erhöhten Drehzahl, zu betreiben. Bei einem Betrieb des Ventilators mit erhöhten Drehzahlen haben mögliche Störgrößen einen geringeren Einfluss auf die Bestimmung der Notwendigkeit der Einleitung eines Abtauprozesses.

Der Betrieb des Ventilators mit erhöhten oder erniedrigten Drehzahlen kann zyklisch erfolgen.

Mit weiterem Vorteil kann vorgesehen sein, dass das Verfahren im Stand oder bei einer geringen Fahrgeschwindigkeit des Kraftfahrzeuges durchgeführt wird.

Hierbei ist es insbesondere von Vorteil, wenn der Schwellwert an die Fahrgeschwindigkeit und/oder an die relative Luftgeschwindigkeit der Umgebungsluft zum Kraftfahrzeug angepasst wird.

Eine weitere Lösung der der Erfindung zugrundeliegenden Aufgabe besteht in der Bereitstellung eines Kraftfahrzeugs, insbesondere eines Elektrofahrzeugs, eines batterieelektrischen Fahrzeugs oder eines Hybridelektrokraftfahrzeugs, wobei das Kraftfahrzeug eine Vorrichtung zum Abtauen eines Wärmeübertragers einer Wärmepumpe des Kraftfahrzeuges aufweist, wobei dem Wärmeübertrager ein Ventilator zugeordnet ist, wobei die Vorrichtung eine Recheneinheit aufweist, wobei die Recheneinheit ausgebildet ist, ein vorbeschriebenes Verfahren durchzuführen.

Das Kraftfahrzeug verfügt bevorzugt über Sensoren zur Ermittlung der Drehzahl und/oder der Leistungsaufnahme des Ventilators und/oder zur Ermittlung der Windgeschwindigkeit und/oder eines Öffnungsgrads einer Kühlerjalousie und/oder der aktuellen Fahrgeschwindigkeit des Kraftfahrzeugs. Gemäß der ersten Alternative des Anspruchs 1 verfügt das Kraftfahrzeug über eine Abstandssensorik zur Ermittlung eines Abstandssignals, insbesondere eines Abstandswertes, des Kraftfahrzeuges zu einem vorausfahrenden Fahrzeug.

Alternativ oder zusätzlich weist das Kraftfahrzeug ein Navigationssystem auf, mittels welchem eine Fahrzeugposition bestimmt werden kann.

Die Leistungsaufnahme des Ventilators kann beispielsweise über das Bussignal aufgegeben und anschließend ausgewertet werden.

Die vorliegende Erfindung wird nachstehend näher anhand der beigefügten Figuren erläutert. Es zeigen:
- Fig. 1: ein Kraftfahrzeug mit einer Vorrichtung zum Abtauen eines Wärmeübertragers einer Wärmepumpe, und
- Fig. 2: ein Blockdiagramm eines Verfahrens zum Einleiten eines Abtauprozesses eines Wärmeübertragers.

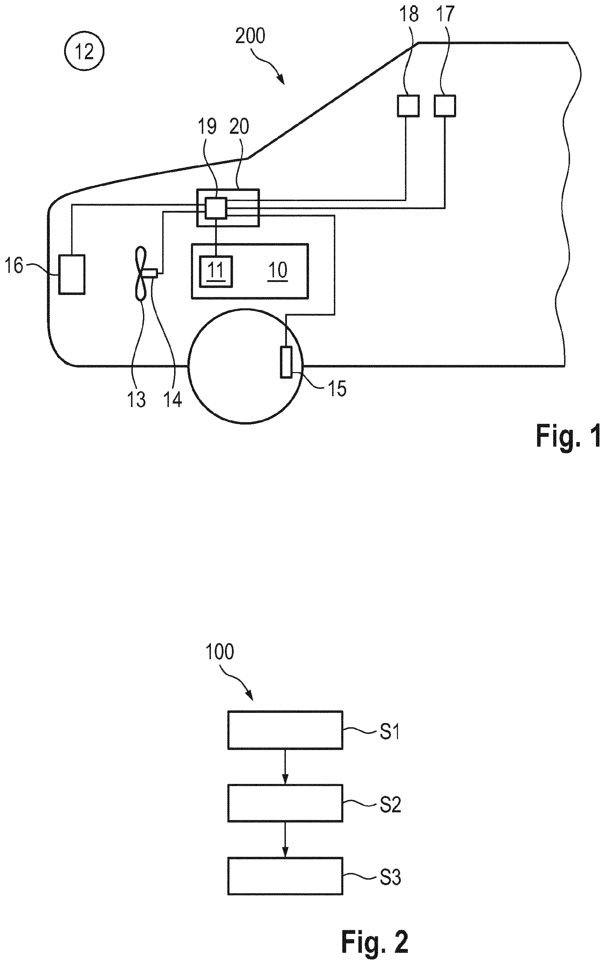

Fig. 1 zeigt ein Kraftfahrzeug 200 mit einer Wärmepumpe 10. Die Wärmepumpe 10 umfasst einen Wärmeübertrager 11 zur Aufnahme von Wärme der Umgebungsluft 12. Dem Wärmeübertrager 11 der Wärmepumpe 10 ist ein Ventilator 13 zugeordnet, welcher ausgebildet ist, einen Luftstrom durch den Wärmeübertrager 11 zu führen. Die Drehzahl des Ventilators 13 kann mittels eines Drehzahlsensors 14 ermittelt werden. Die Leistungsaufnahme des Ventilators 13 wird über ein Bussignal ausgelesen. Das Kraftfahrzeug 200 umfasst zudem einen Fahrgeschwindigkeitssensor 15, eine Abstandssensorik 16, einen Temperatursensor 17 und ein Navigationssystem 18. Mit dem Fahrgeschwindigkeitssensor 15 wird die aktuelle Fahrgeschwindigkeit des Kraftfahrzeuges 200 ermittelt. Die Abstandssensorik 16 erzeugt ein Abstandssignal, wenn das Kraftfahrzeug 200 hinter einem vorausfahrenden Fahrzeug hinterherfährt. Bevorzugt kann mittels der Abstandssensorik 16 ein konkreter Abstandswert in Metern zu dem vorausfahrenden Fahrzeug ermittelt werden. Mittels des Navigationssystems 18 kann eine Fahrzeugposition des Kraftfahrzeuges 200 ermittelt werden. Insbesondere kann festgestellt werden, ob sich das Kraftfahrzeug 200 in einem Tunnel, in einem Tal oder in einer Straßenschlucht befindet. Mit dem Temperatursensor 17 kann schließlich die Außenlufttemperatur ermittelt werden. Diese mit den Sensoren ermittelten Parameter sind Indikatoren für eine aktuelle relative Luftgeschwindigkeit der Umgebungsluft 12 zum Kraftfahrzeug 200.

Die Drehzahl des Ventilators 13 und dessen Leistungsaufnahme sowie die Fahrgeschwindigkeit des Kraftfahrzeuges 200, das Abstandssignal, die Fahrzeugposition und die Außenlufttemperatur werden an eine Recheneinheit 19 einer Vorrichtung 20 zum Abtauen des Wärmeübertragers 11 übertragen. Die Recheneinheit 19 ermittelt auf Basis mindestens eines der Parameter Fahrgeschwindigkeit, Abstandssignal, Fahrzeugposition oder Außenlufttemperatur zunächst einen aktuellen Drehzahlschwellwert und/oder einen aktuellen Leistungsaufnahmeschwellwert.

Anschließend werden in der Recheneinheit 19 die Leistungsaufnahme und/oder die Drehzahl des Ventilators 13 mit dem entsprechenden Schwellwert, insbesondere dem Leistungsaufnahmeschwellwert und/oder dem Drehzahlschwellwert, verglichen. Überschreitet oder unterschreitet die Drehzahl und/oder die Leistungsaufnahme den entsprechenden Schwellwert, so weist die Recheneinheit 19 die Vorrichtung 20 an, einen Abtauprozess des Wärmeübertragers 11 durchzuführen.

Fig. 2 zeigt ein Blockdiagramm eines Verfahrens 100 zum Einleiten eines Abtauprozesses eines Wärmeübertragers 11 einer Wärmepumpe 10 eines Kraftfahrzeugs 200.

Zunächst werden in einem ersten Verfahrensschritt S1 die aktuelle Drehzahl und/oder die aktuelle Leistungsaufnahme des dem Wärmeübertrager 11 zugeordneten Ventilators 13 ermittelt. Ferner wird mindestens einer der Parameter Fahrgeschwindigkeit des Kraftfahrzeugs, Abstand des Kraftfahrzeugs zu einem vorausfahrenden Fahrzeug, Fahrzeugposition und Außenlufttemperatur ermittelt. Aus diesen Parametern wird dann in einem zweiten Verfahrensschritt S2 ein Schwellwert, insbesondere ein Leistungsaufnahmeschwellwert und/oder ein Drehzahlschwellwert, ermittelt. In einem dritten Verfahrensschritt S3 wird die aktuelle Leistungsaufnahme und/oder die aktuelle Drehzahl mit dem Leistungsaufnahmeschwellwert und/oder dem Drehzahlschwellwert verglichen. Unter- oder überschreitet die Leistungsaufnahme beziehungsweise die Drehzahl den Leistungsaufnahmeschwellwert bzw. den Drehzahlschwellwert, so wird ein Abtauprozess für den Wärmeübertrager 11 eingeleitet. Das Abtauen des Wärmeübertragers 11 kann beispielsweise durch ein Heizelement der Vorrichtung 20 zum Abtauen des Wärmeübertragers 11 erfolgen.

### Bezugszeichenliste

- 100: Verfahren
- 200: Kraftfahrzeug
- 10: Wärmepumpe
- 11: Wärmeübertrager
- 12: Umgebungsluft
- 13: Ventilator
- 14: Drehzahlsensor
- 15: Fahrgeschwindigkeitssensor
- 16: Abstandssensorik
- 17: Temperatursensor
- 18: Navigationssystem
- 19: Recheneinheit
- 20: Vorrichtung

- S1-S3: Verfahrensschritte

## Patentansprüche

1. Verfahren (100) zum Einleiten eines Abtauprozesses eines Wärmeübertragers (11) einer Wärmepumpe (10) eines Kraftfahrzeugs (200), insbesondere eines Elektrofahrzeugs oder eines batterieelektrischen Fahrzeugs oder eines Hybridelektrokraftfahrzeugs, wobei dem Wärmeübertrager (11) ein Ventilator (13) zugeordnet ist, wobei eine Leistungsaufnahme und/oder eine Drehzahl des Ventilators (13) überwacht wird, wobei ein Abtauprozess eingeleitet wird, wenn die Leistungsaufnahme und/oder die Drehzahl einen Schwellwert überschreitet und/oder unterschreitet, wobei der Schwellwert in Abhängigkeit eines Parameters ermittelt wird, wobei der Parameter ein Indikator für eine aktuelle relative Luftgeschwindigkeit der Umgebungsluft (12) zum Kraftfahrzeug (200) ist, **dadurch gekennzeichnet, dass** der Parameter ein Abstandssignal des Kraftfahrzeugs (200) zu einem vorausfahrenden Fahrzeug ist, und/oder dass der Parameter eine mittels eines Navigationssystems (18) des Kraftfahrzeugs (200) bestimmte Fahrzeugposition ist.

2. Verfahren (100) nach Anspruch 1, **dadurch gekennzeichnet**, das der Parameter die aktuelle Fahrgeschwindigkeit des Kraftfahrzeugs (200) ist.

3. Verfahren (100) nach Anspruch 1 oder 2, **dadurch gekennzeichnet, dass** der Parameter die Windgeschwindigkeit und/oder die Windrichtung ist.

4. Verfahren (100) nach einem der vorgenannten Ansprüche, **dadurch gekennzeichnet, dass** das Abstandssignal ein Abstandswert des Kraftfahrzeugs (200) zu dem vorausfahrenden Fahrzeug ist.

5. Verfahren (100) nach einem der vorgenannten Ansprüche, **dadurch gekennzeichnet, dass** die Fahrzeugposition eine Position des Kraftfahrzeugs (200) in einem Straßentunnel, in einem Tal oder in einer Straßenschlucht ist.

6. Verfahren (100) nach einem der vorgenannten Ansprüche, **dadurch gekennzeichnet, dass** der Schwellwert in Abhängigkeit einer Taupunkttemperatur der Luft am Wärmeübertrager (11) ermittelt wird, und/oder dass der Abtauprozess nur eingeleitet wird, wenn die Temperatur der Luft an dem Wärmeübertrager (11) die Taupunkttemperatur unterschreitet.

7. Verfahren (100) nach einem der vorgenannten Ansprüche, **dadurch gekennzeichnet, dass** der Schwellwert in Abhängigkeit der Luftdichte und/oder der Außenlufttemperatur und/oder der Außenluftfeuchtigkeit ermittelt wird, und/oder dass der Parameter ein Öffnungsgrad einer Kühlerjalousie ist.

8. Verfahren (100) nach einem der vorgenannten Ansprüche, **dadurch gekennzeichnet, dass** der Ventilator (13) zur Bestimmung, ob ein Abtauprozess eingeleitet werden soll, für einen kurzen Zeitraum mit einer erhöhten oder einer erniedrigten Drehzahl betrieben wird.

9. Verfahren (100) nach einem der vorgenannten Ansprüche, **dadurch gekennzeichnet, dass** das Verfahren (100) im Stand oder bei einer geringen Fahrgeschwindigkeit des Kraftfahrzeugs (200) durchgeführt wird.

10. Kraftfahrzeug (200) mit Vorrichtung (20) zum Abtauen eines Wärmeübertragers (11) einer Wärmepumpe (10) des Kraftfahrzeugs, wobei dem Wärmeübertrager (11) ein Ventilator (13) zugeordnet ist, wobei die Vorrichtung (20) eine Recheneinheit (19) aufweist, welche ausgebildet ist, ein Verfahren (100) nach einem der vorgenannten Ansprüche auszuführen.

## Claims

1. Method (100) for initiating a defrosting process of a heat exchanger (11) of a heat pump (10) of a motor vehicle (200), in particular an electric vehicle or a battery electric vehicle or a hybrid electric motor vehicle, wherein the heat exchanger (11) is assigned a fan (13), wherein a power consumption and/or a speed of the fan (13) is monitored, wherein a defrosting process is initiated if the power consumption and/or the speed exceeds and/or falls below a threshold value, wherein the threshold value is determined in dependence on a parameter, wherein the parameter is an indicator of a current relative air speed of ambient air (12) in relation to the motor vehicle (200), **characterized in that** the parameter is a distance signal of the motor vehicle (200) in relation to a vehicle travelling ahead, and/or **in that** the parameter is a vehicle position determined by means of a navigation system (18) of the motor vehicle (200) .

2. Method (100) according to Claim 1, **characterized in that** the parameter is the current travelling speed of the motor vehicle (200).

3. Method (100) according to Claim 1 or 2, **characterized in that** the parameter is the wind speed and/or the wind direction.

4. Method (100) according to one of the preceding claims, **characterized in that** the distance signal is a distance value of the motor vehicle (200) in relation to the vehicle travelling ahead.

5. Method (100) according to one of the preceding claims, **characterized in that** the vehicle position is a position of the motor vehicle (200) in a road tunnel, in a valley or in an urban canyon.

6. Method (100) according to one of the preceding claims, **characterized in that** the threshold value is determined in dependence on a dew-point temperature of the air at the heat exchanger (11), and/or **in that** the defrosting process is only initiated if the temperature of the air at the heat exchanger (11) falls below the dew-point temperature.

7. Method (100) according to one of the preceding claims, **characterized in that** the threshold value is determined in dependence on the air density and/or the outside air temperature and/or the outside air humidity, and/or **in that** the parameter is a degree of opening of a radiator shutter.

8. Method (100) according to one of the preceding claims, **characterized in that**, for determining whether a defrosting process is to be initiated, the fan (13) is operated for a short time at an increased or decreased speed.

9. Method (100) according to one of the preceding claims, **characterized in that** the method (100) is carried out when the motor vehicle (200) is stationary or travelling at a low speed.

10. Motor vehicle (200) with a device (20) for defrosting a heat exchanger (11) of a heat pump (10) of the motor vehicle, wherein the heat exchanger (11) is assigned a fan (13), wherein the device (20) has a computing unit (19), which is designed to carry out a method (100) according to one of the preceding claims.

## Revendications

1. Procédé (100) de lancement d'un processus de dégivrage d'un échangeur de chaleur (11) d'une pompe à chaleur (10) d'un véhicule automobile (200), notamment d'un véhicule électrique ou d'un véhicule électrique à batterie ou d'un véhicule électrique hybride, un ventilateur (13) étant associé à l'échangeur de chaleur (11), la consommation d'énergie et/ou la vitesse de rotation du ventilateur (13) étant surveillée, un processus de dégivrage étant lancé si la consommation d'énergie et/ou la vitesse de rotation devient supérieure et/ou inférieure à une valeur seuil, la valeur seuil étant déterminée en fonction d'un paramètre, le paramètre étant un indicateur de la vitesse relative actuelle de l'air ambiant (12) par rapport au véhicule automobile (200), **caractérisé en ce que** le paramètre est un signal de distance entre le véhicule automobile (200) et un véhicule qui le précède, et/ou **en ce que** le paramètre est une position du véhicule déterminée au moyen du système de navigation (18) du véhicule automobile (200).

2. Procédé (100) selon la revendication 1, **caractérisé en ce que** le paramètre est la vitesse de roulement actuelle du véhicule automobile (200).

3. Procédé (100) selon la revendication 1 ou 2, **caractérisé en ce que** le paramètre est la vitesse du vent et/ou la direction du vent.

4. Procédé (100) selon l'une des revendications précédentes, **caractérisé en ce que** le signal de distance est une valeur de distance entre le véhicule automobile (200) et le véhicule qui le précède.

5. Procédé (100) selon l'une des revendications précédentes, **caractérisé en ce que** la position du véhicule est une position du véhicule automobile (200) dans un tunnel routier, dans une vallée ou dans une gorge routière.

6. Procédé (100) selon l'une des revendications précédentes, **caractérisé en ce que** la valeur seuil est déterminée en fonction de la température du point de rosée de l'air au niveau de l'échangeur de chaleur (11) et/ou **en ce que** le processus de dégivrage n'est lancé que si la température de l'air au niveau de l'échangeur de chaleur (11) devient inférieure à la température du point de rosée.

7. Procédé (100) selon l'une des revendications précédentes, **caractérisé en ce que** la valeur seuil est déterminée en fonction de la densité de l'air et/ou de la température de l'air extérieur et/ou de l'humidité de l'air extérieur, et/ou **en ce que** le paramètre est le degré d'ouverture d'un volet de radiateur.

8. Procédé (100) selon l'une des revendications précédentes, **caractérisé en ce que** le ventilateur (13) fonctionne pendant une courte période à une vitesse de rotation augmentée ou réduite afin de déterminer si un processus de dégivrage doit être lancé.

9. Procédé (100) selon l'une des revendications précédentes, **caractérisé en ce que** le procédé (100) est mis en œuvre lorsque le véhicule automobile (200) est à l'arrêt ou à faible vitesse de roulement.

10. Véhicule automobile (200) comprenant un dispositif (20) de dégivrage d'un échangeur de chaleur (11) d'une pompe à chaleur (10) du véhicule automobile, un ventilateur (13) étant associé à l'échangeur de chaleur (11), le dispositif (20) comportant une unité informatique (19) qui est conçue pour mettre en œuvre un procédé (100) selon l'une des revendications précédentes.
